# EUROPÄISCHE PATENTSCHRIFT

(11) **EP 3 135 615 B1**
(45) Veröffentlichungstag und Bekanntmachung des Hinweises auf die Patenterteilung: **30.01.2019**
(21) Anmeldenummer: 15182277.2
(22) Anmeldetag: 25.08.2015
(51) Int. Cl.: B65G 47/88, B65G 1/08, G07F 11/28, G07F 17/00

(54) **AUSLÖSEVORRICHTUNG ZUM FREIGEBEN UND SPERREN EINER AUSGABE EINES STÜCKGUTES SOWIE VERFAHREN ZUM AUSGEBEN EINES STÜCKGUTES**
TRIGGER DEVICE TO PERMIT OR TO BLOCK THE DISPENSING OF A PIECE GOOD AND METHOD FOR DISPENSING ONE PIECE GOOD
DISPOSITIF DE LIBERATION ET DE BLOCAGE D'UNE SORTIE D'UNE MARCHANDISE ET PROCEDE DE SORTIE D'UNE MARCHANDISE

(43) Veröffentlichungstag der Anmeldung: 01.03.2017
(73) Patentinhaber: Becton Dickinson Rowa Germany GmbH, 53539 Kelberg (DE)
(72) Erfinder: HELLENBRAND, Christoph, 56761 Kaifenheim (DE); GROSS, Dietmar, 53539 Kelberg (DE); BROKONIER, Stephan, 54570 Neroth (DE)
(74) Vertreter: Zenz Patentanwälte Partnerschaft mbB

(56) Entgegenhaltungen:
- EP-A1- 2 404 589
- EP-A1- 2 628 475
- CN-A- 102 975 889
- CN-A- 103 144 897
- CN-U- 202 529 525
- CN-U- 203 153 177
- DE-A1- 3 244 698
- JP-A- 2008 119 069
- KR-B1- 100 240 772

## Beschreibung

Die vorliegende Erfindung betrifft eine Auslösevorrichtung zum Freigeben und Sperren einer Ausgabe eines Stückgutes aus einem geneigten Lagerschacht sowie ein Verfahren zum Ausgeben eines Stückgutes aus einem solchen Lagerschacht.

Auslösevorrichtungen der oben genannten Art werden in Regallagern eingesetzt, die eine Vielzahl geneigter Lagerschächte aufweisen. Die geneigten Lagerschächte enthalten jeweils eine Mehrzahl von in Längsrichtung des Lagerschachtes hintereinander angeordneten Stückgütern.

Die Auslösevorrichtung ist bei einem Ausgabeende des Lagerschachtes angeordnet und umfasst eine Sperre zum Halten der Stückgüter in dem Lagerschacht. Sobald die Sperre in die "Freigabestellung" bewegt wird, werden ein oder mehrere Stückgüter aus dem Lagerschacht ausgegeben. Bei geneigten Lagerschächten geschieht dies dadurch, dass ein oder mehrere Stückgüter schwerkraftbedingt aus dem Lagerschacht rutschen oder gleiten, wobei die Neigung des Lagerschachtes die Gleitrichtung vorgibt.

Ein Lager zum Lagern von Arzneimittelpackungen in geneigten Lagerschächten ist beispielsweise aus der Druckschrift WO 03/010073 A1 bekannt. Eine Auslösevorrichtung zum Freigeben oder Sperren der Ausgabe wenigstens eines Stückgutes ist beispielsweise aus der EP 1 803 663 A1 bekannt. Die aus der vorgenannten Druckschrift bekannte Auslösevorrichtung wird üblicherweise bei in Apotheken oder Krankenhäusern verwendeten Kommissioniervorrichtungen zur automatischen Auslagerung von Arzneimittelpackungen verwendet. Bei der vorgenannten Auslösevorrichtung wird eine Sperre über einen unter einem Lagerschacht angeordneten Antrieb über bzw. unter den Lagerschachtboden gefahren, um die Ausgabe aus dem Lagerschacht freizugeben oder zu sperren. Nachteilig bei dieser Auslösevorrichtung ist es, dass bedingt durch die Konstruktion der Sperre nur Stückgüter mit einem relativ geringen Gewicht verwendet werden können, da die Sperre ansonsten bei dem Anschlag eines nachfolgenden, nicht auszulagernden Stückgutes Schaden nehmen kann. Nachteilig ist ferner, dass die Sperre bei relativ hohen Stückgütern ebenfalls relativ hoch ausgebildet sein muss, um einen Überschlag eines nachfolgenden, nicht auszulagernden Stückgutes bei der bzw. an der Sperre zu vermeiden.

Auch aus der EP 2 404 589 A1 ist eine Auslösevorrichtung bekannt. Die Sperrwirkung wird entsprechend der vorgenannten Druckschrift erreicht, es wird eine Sperre in einen Gleitweg gefahren und aus diesem entfernt. Aufgrund des vergleichbaren Sperrmechanismus ergeben sich entsprechende Nachteile. Die EP 2 404 589 A1 offenbart eine Auslösevorrichtung nach dem Obenbegriff des Anspruchs 1.

Es ist Aufgabe der vorliegenden Erfindung eine Auslösevorrichtung bereitzustellen, über welche große und / oder schwere Stückgüter zuverlässig ausgebbar sind.

Die Aufgabe wird erfindungsgemäß gelöst durch eine Auslösevorrichtung gemäß Patentanspruch 1. Die erfindungsgemäße Auslösevorrichtung dient zum Freigeben und Sperren einer Ausgabe eines Stückgutes aus einem geneigten Lagerschacht, wobei der Lagerschacht ein Ausgabeende und einen Lagerschachtboden aufweist, welcher eine Gleitebene definiert, auf welcher bzw. entlang welcher sich Stückgüter in Längsrichtung des Lagerschachtes in einer Gleitrichtung aus dem Lagerschacht bewegen können. Üblicherweise sind eine Mehrzahl von geneigten Lagerschächten nebeneinander angeordnet, so dass ebenfalls eine Mehrzahl von Lagerschachtböden die vorgenannte Gleitebene definieren, entlang bzw. auf welcher die Stückgüter in Gleitrichtung aus den Lagerschächten rutschen bzw. gleiten können, sobald eine Auslösevorrichtung einen Lagerschacht freigegeben hat.

Die erfindungsgemäße Auslösevorrichtung umfasst einen Antrieb und ein mit dem Antrieb gekoppeltes Hebe- und Vorstoppbauteil mit einer oberen Gleitfläche, wobei das Hebe- und Vorstoppbauteil mit dem Antrieb derart gekoppelt ist, dass die Gleitfläche über die von dem bzw. den Lagerschachtböden definierte Gleitebene in eine Freigabestellung der Auslösevorrichtung und auf eine Höhe mit der Gleitebene in eine Sperrstellung der Auslösevorrichtung bewegbar ist. Das Hebe- und Vorstoppbauteil umfasst ferner einen in der Freigabestellung über die Gleitebene ragenden Anschlag.

Das Hebe- und Vorstoppbauteil gemäß der erfindungsgemäßen Auslösevorrichtung ist also zwischen zwei Stellungen, nämlich der Freigabestellung und der Sperrstellung bewegbar, wobei in der Freigabestellung die Gleitfläche des Hebe- und Vorstoppbauteiles über der Gleitebene liegt, d.h. ein in Sperrstellung teilweise auf dem Hebe- und Vorstoppbauteil aufliegendes Stückgut bei Bewegen des Hebe- und Vorstoppbauteiles zumindest teilweise über die Gleitebene angehoben wird. Gleichzeitig wird bei Bewegen des Hebe- und Vorstoppbauteiles über die Gleitebene hinaus in die Freigabestellung ein Anschlag über die Gleitebene bewegt, der als Stopp für ein nachfolgendes, in dem Lagerschacht angeordnetes Stückgut dient. Das Hebe- und Vorstoppbauteil hat also zwei Aufgaben, nämlich ein aufliegendes Stückgut anzuheben, und damit das Ausgeben zu ermöglichen (dies wird nachfolgend dargelegt), und einen zumindest temporären Stopp oder zumindest eine Abbremsung für ein nachfolgendes Stückgut bereitzustellen.

In der Sperrstellung liegt das auszulagernde Stückgut teilweise (oder ganz) auf dem Hebe- und Vorstoppbauteil auf. Um zu verhindern, dass bei dem Bewegen des Hebe- und Vorstoppbauteils in die Freigabestellung mehrere Stückgüter angehoben (und ausgelagert) werden ist das Hebe- und Vorstoppbauteil stets "kürzer" als eine auszulagernde Arzneimittelpackung in Auslagerungsrichtung lang ist (bezogen auf die Längsachse der Auslösevorrichtung die Abmessung des Stückgutes in Richtung Längsachse).

Die erfindungsgemäße Auslösevorrichtung umfasst ferner in Gleitrichtung hinter bzw. stromab dem bzw. des Hebe- und Vorstoppbauteil(s) einen Sperrkörper mit einer oberen Sperrkörpergleitfläche, einer über die Gleitebene ragenden permanenten Sperrkante), die als integraler Bestandteil des Sperrkörpers ausgebildet ist, sowie einer zur Verhinderung eines Überschlags des Stückguts an der Sperrkante ein- und ausfahrbaren Sperre, wobei die Sperre derart mit dem Antrieb gekoppelt ist, dass die Sperre unter die Sperrkörpergleitfläche in eine Freigabestellung der Auslösevorrichtung und über die Sperrkörpergleitfläche in eine Sperrstellung der Auslösevorrichtung bewegbar ist.

Die Sperrkante des Sperrkörpers bildet den eigentlichen Halt bzw. Stopp für die in einem Lagerschacht angeordneten Stückgüter. Diese Sperrkante ragt über die Gleitebene, das heißt sie bildet in der Sperrstellung, in welcher die Gleitfläche des Hebe- und Vorstoppbauteiles an der Gleitebene ausgerichtet ist, den eigentlichen Halt bzw. Stopp für die Stückgüter in dem Lagerschacht. Die Sperrkante ist Teil des Sperrkörpers, und wird nicht von einem aus der Gleitebene herausfahrbaren Körper gebildet, so dass die Sperrkante, als integraler Bestandteil des Sperrkörpers, wesentlich kompakter und stabiler ausgeführt sein kann als dies bei ein- und ausfahrbaren Sperren denkbar ist. Die Sperrkante kann somit zum Stoppen / Halten größerer Lasten verwendet werden, als dies mit bekannten Sperren möglich ist.

Erfindungsgemäß ist es ferner vorgesehen, dass die Sperre derart ausgebildet bzw. angeordnet ist, dass die Sperrkante in Gleitrichtung vor bzw. stromauf der Sperre ausgebildet ist, so dass in der Sperrstellung der Auslösevorrichtung, in welcher die Gleitfläche (31) des Hebe- und Vorstoppbauteils an der Gleitebene ausgerichtet ist, kein dauerhafter Kontakt zwischen Stückgut und Sperre stattfindet, sondern dass die Bewegung der Stückgüter in dem Lagerschacht durch die Sperrkante gestoppt wird. Wie bereits dargelegt, wird die Bewegung der Stückgüter in dem Lagerschacht durch die Sperrkante, und nicht die Sperre selber, gestoppt. Die Sperre dient primär dazu, einen Überschlag bei Anschlag eines Stückgutes an der Sperrkante zu verhindern.

Die Verwendung einer unbeweglichen, von einem stabilen Bauteil bereitgestellten Sperrkante, die über die Gleitebene ragt, in Kombination mit einem höhenverstellbaren Hebe- und Stoppbauteil gewährleistet, dass auch schwere und große Stückgüter sicher ausgegeben bzw. gehalten werden können. Der bei dem Hebe- und Vorstoppbauteil vorgesehene Anschlag, der in der Freigabestellung über der Gleitebene angeordnet ist, sorgt bereits für ein "Vorstoppen" (oder zumindest abbremsen) der nachrutschenden Stückgüter, was dazu beiträgt, dass große und schwere Stückgüter sicher gehandhabt werden können. Bei bekannten Auslösevorrichtungen wird in der Freigabestellung eine durchgehende Gleitebene geschaffen, so dass die Gefahr besteht, dass mehrere Stückgüter "durchrutschen", wenn eine Sperre nicht schnell genug in die Sperrstellung bewegt wird. Erfindungsgemäß ist aber in jeder Stellung ein Stopp bzw. Halt vorgesehen, Sperrkante des Sperrkörpers oder Anschlag des Hebe- und Vorstoppbauteils, so dass das "Durchrutschen" wirksam verhindert ist.

Vorteilhaft bei der erfindungsgemäßen Auslösevorrichtung ist ferner, dass ein Freigeben der Auslösevorrichtung ohne großen Kraftaufwand geschehen kann, da die Stückgüter nicht an einer Sperre anliegen.

Im Gegensatz zu bekannten Auslösevorrichtungen, bei denen stets so vorgegangen wird, dass eine Sperre in die Gleitebene bewegt wird, ist erfindungsgemäß eine permanente (und damit potentiell stabilere) Sperrkante vorgesehen, die nur durch die Bewegung eines Bauteils (das Hebe- und Vorstoppbauteil) überwunden werden kann, wobei diese Bauteil gleichzeitig einen Anschlag für nachfolgende Stückgüter bereitstellt. Die normalerweise zum Halten von Stückgütern genutzte Sperre wird erfindungsgemäß lediglich als Überschlagschutz, nicht aber zum Halten von Stückgütern selber, genutzt. Die Kombination der erfindungsgemäßen Merkmale ermöglicht es, dass auch große und schwere Stückgüter sicher gehandhabt werden können.

Die erfindungsgemäße Auslösevorrichtung umfasst ein bewegbares Hebe- und Vorstoppbauteil sowie eine bewegbare Sperre. Beide Bauteile sind mit dem Antrieb der Auslösevorrichtung gekoppelt, um die entsprechenden Bewegungen auszulösen. Bei einer konstruktiv besonders einfachen Ausführungsform ist es vorgesehen, dass die erfindungsgemäße Auslösevorrichtung einen Bewegungsumsetzer aufweist, der mit dem Antrieb, dem Hebe- und Vorstoppbauteil und der Sperre des Sperrkörpers derart gekoppelt ist, dass bei Bewegung des Bewegungsumsetzers das Hebe- und Vorstoppbauteil und die Sperre gleichzeitig bewegbar sind, d.h. dass mit einer Bewegung des Antriebes sowohl das Hebe- und Vorstoppbauteil als auch die Sperre bewegbar sind.

Eine mechanisch besonders einfache und robuste Ausführungsform der erfindungsgemäßen Auslösevorrichtung sieht vor, dass der Bewegungsumsetzer einen um eine Achse drehbaren dreiarmigen Abschnitt aufweist, wobei die drei Arme des dreiarmigen Abschnittes mit dem Hebe- und Vorstoppbauteil, der Sperre und einem Getriebe des Antriebs gekoppelt sind. Indem der Bewegungsumsetzer erfindungsgemäß einen drehbaren dreiarmigen Abschnitt aufweist, ist es möglich, mit einer Drehbewegung des Bewegungsumsetzers die Sperre zu heben bzw. zu senken und das Hebe- und Vorstoppbauteil simultan zu senken bzw. zu heben. Bei einer entsprechenden Ausführungsform ist es ferner möglich, die Auslösevorrichtung durch eine einfache Änderung der Armlängen an verschiedene Ausführungsgrößen anzupassen.

Die erfindungsgemäße Auslösevorrichtung ist üblicherweise mit einer Steuereinrichtung einer Kommissioniervorrichtung gekoppelt. Von dieser Steuereinrichtung erhält die Auslösevorrichtung den Befehl, ein oder mehrere Stückgüter aus dem Lagerschacht auszugeben. Aufgrund von fehlerhaften Stückgütern, oder anderen, nicht vorhersehbaren Fehlerquellen, kann es jedoch vorkommen, dass bei Bewegung der Auslösevorrichtung in die Freigabestellung kein Stückgut aus dem Lagerschacht ausgegeben wird. Um die Ausgabe eines Stückgutes zu verifizieren, ist es bei einer bevorzugten Ausführungsform vorgesehen, dass der Sperrkörper einen Ausgabesensor umfasst, der das Ausgeben eines Stückgutes aus einem Lagerschacht erfasst, wobei der Ausgabesensor üblicherweise in Gleitrichtung hinter der Sperre angeordnet ist.

Um das Ausgeben eines Stückgutes zu vereinfachen, ist es bei einer bevorzugten Ausführungsform vorgesehen, dass die Sperre bei ihrem oberen Abschnitt eine Sperrrolle umfasst. Diese Rolle unterstützt bzw. vereinfacht das Gleiten eines Stückgutes über den Sperrkörper. Alternativ oder zusätzlich kann es bei einer weiteren bevorzugten Ausführungsform vorgesehen sein, dass bei dem Anschlag des Hebe- und Vorstoppbauteiles, der ein nachfolgendes Stückgut temporär vorstoppt oder zumindest abbremst, eine Anschlagrolle vorgesehen ist, die bei Bewegung des Hebe- und Vorstoppbauteiles in die Sperrstellung die Bewegung des nachfolgenden Stückgutes auf das Hebe- und Vorstoppbauteil unterstützt bzw. vereinfacht.

Zum Vereinfachen des Gleitens bzw. Rutschens von Stückgütern über einzelne Bauteile der Auslösevorrichtung kann es bei einer bevorzugten Ausführungsform vorgesehen sein, dass die Gleitfläche des Hebe- und Vorstoppbauteiles und/oder die Sperrkörpergleitfläche eine Beschichtung mit vermindertem Reibungswiderstand aufweisen.

Vorteilhaft bei der erfindungsgemäßen Auslösevorrichtung wird die Aufgabe ferner gelöst durch ein Verfahren nach Anspruch 8. Bei dem erfindungsgemäßen Verfahren zum Ausgeben eines Stückgutes aus einem geneigten Lagerschacht sind in diesem mehrere in Gleitrichtung hintereinander liegende Stückgüter angeordnet, und der Lagerschachtboden des Lagerschachtes definiert eine Gleitebene, auf bzw. entlang welcher Stückgüter in Richtung auf ein Ausgabeende des Lagerschachtes gleiten bzw. rutschen.

Vorteilhaft wird zum Ausgeben eines Stückgutes ein mit einem Antrieb gekoppeltes Hebe- und Vorstoppbauteil aus einer Sperrstellung in eine Freigabestellung bewegt, wobei bei dieser Bewegung eine Gleitfläche des Hebe- und Vorstoppbauteiles über die Gleitebene bewegt wird. Mit der Bewegung des Hebe- und Vorstoppbauteiles in die Freigabestellung wird ein zumindest teilweise aufliegendes auszugebendes Stückgut über eine Sperrkante eines Sperrkörpers gehoben, der in Gleitrichtung hinter dem Hebe- und Vorstoppbauteil angeordnet ist. Gleichzeitig wird ein Anschlag des Hebe- und Vorstoppbauteiles über die Gleitebene bewegt und bildet einen temporären Stopp bzw. Anschlag für nachfolgende Stückgüter. Vorteilhaft wird eine mit dem Antrieb gekoppelte Sperre in dem Sperrkörper unter eine Sperrkörpergleitfläche bewegt und dann tritt das auszugebende Stückgut über die Sperrkörpergleitfläche aus dem Lagerschacht aus.

Um bei großen und/oder schweren Stückgütern zusätzlich zu der Sperrkante einen "Überschlagschutz" bereitzustellen, ist es bei einer bevorzugten Ausführungsform vorgesehen, dass, nach dem Ausgeben des auszugebenden Stückgutes, das Hebe- und Vorstoppbauteil wieder in die Sperrstellung bewegt wird, wobei die Gleitfläche an der Gleitebene ausgerichtet wird und sich das nachfolgende Stückgut bei erfolgter Ausrichtung in Gleitrichtung auf die Sperrkante bewegt, welche für das Stückgut einen Anschlag bereitstellt, und die Sperre über die Sperrkörpergleitfläche bewegt wird und bei Anschlag des nachfolgenden Stückgutes an der Sperrkante ein Überschlagen des Stückgutes verhindert.

Bei einer bevorzugten Ausführungsform kann es ferner vorgesehen sein, dass das Austreten des auszugebenden Stückgutes mit einem Ausgabesensor überwacht wird, der vorzugsweise in Gleitrichtung hinter der Sperre angeordnet ist.

Im Nachfolgenden wird eine bevorzugte Ausführungsform der erfindungsgemäßen Auslösevorrichtung und des bevorzugten Verfahrens unter Bezugnahme auf die Zeichnung beschrieben, in welcher
Figur 1 eine Schrägansicht eines Regalbodens mit einer Mehrzahl von Lagerschächten und einer Mehrzahl von Auslösevorrichtungen zeigt,
Figur 2 eine Detailansicht von Figur 1 zeigt,
Figuren 3A-3D mehrere Schrägansichten der bevorzugten Ausführungsform der Auslösevorrichtung in Freigabestellung zeigen,
Figuren 4A-4D mehrere Schrägansichten der bevorzugten Ausführungsform der Auslösevorrichtung in Sperrstellung zeigen,
Figuren 5A und 5B Seitenansichten der bevorzugten Ausführungsform der Auslösevorrichtung in Freigabestellung zeigen,
Figuren 6A und 6B Seitenansichten der bevorzugten Ausführungsformen der Auslösevorrichtung in Sperrstellung zeigen, und
Figuren 7A-7C Seitenansichten verschiedener Stellungen während eines Freigebens eines Stückgutes zeigen.

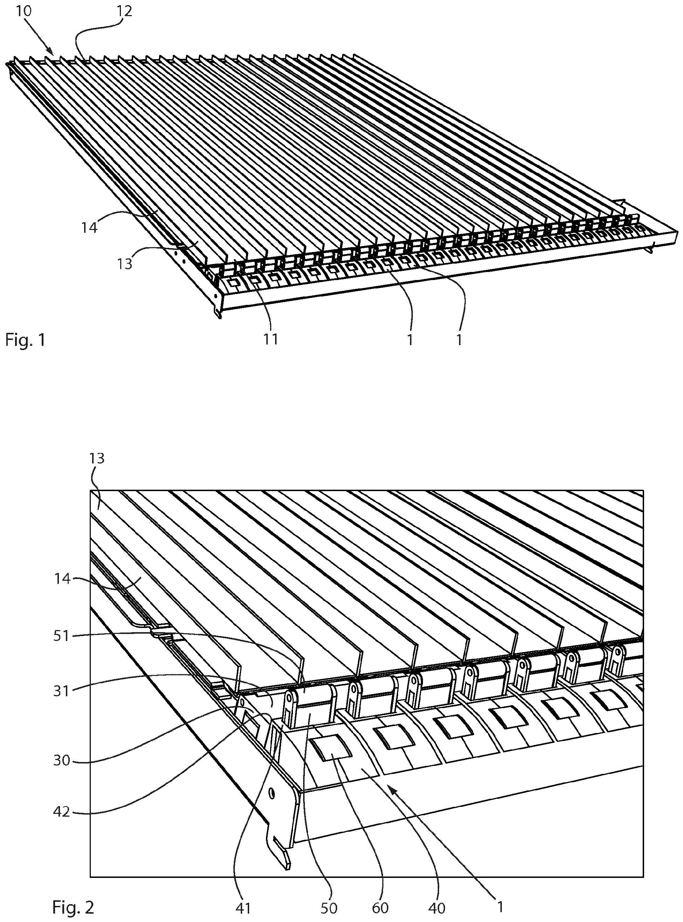

Figur 1 zeigt eine Schrägansicht eines Regalbodens einer Kommissioniervorrichtung mit einer Mehrzahl von nebeneinander angeordneten geneigten Lagerschächten 10, die jeweils ein Einlagerungsende 12 und ein Ausgabeende 11 aufweisen. Bei jedem Ausgabeende 11 eines Lagerschachtes 10 ist eine Auslösevorrichtung 1 angeordnet. Die Lagerschächte 10 werden gebildet durch jeweils zwei Seitenwände 14 und einen Lagerschachtboden 13, wobei die Lagerschachtböden 13 eine Gleitebene definieren, entlang welcher Stückgüter in einer der Längsrichtung bzw. der Neigung der Lagerschächte entsprechenden Gleitrichtung auf das Ausgabeende hin bzw. hin zu den Auslösevorrichtungen gleiten bzw. rutschen. Die Gleitebene wird im nachfolgenden zur Vereinfachung der Darstellung der Erfindung genutzt, ist aber kein Bauteil der Auslösevorrichtung selber. Das oder die der Gleitebene entsprechenden Bauteile sind die Lagerschachtböden.

Figur 2 zeigt eine Detailansicht mit einer Mehrzahl von nebeneinander angeordneten Lagerschächten 10, wobei bei jedem Ausgabeende eines Lagerschachtes eine Auslösevorrichtung 1 (in der hier beschriebenen bevorzugten Ausführungsform) vorgesehen ist. Die Auslösevorrichtung 1 umfasst ein Hebe- und Vorstoppbauteil 30, welches sich direkt an einen Schachtboden 13 anschließt. Dieses Hebe- und Vorstoppbauteil 30 umfasst eine Gleitfläche 31, auf welcher in der gezeigten Sperrstellung der Auslösevorrichtung ein (nicht dargestelltes) Stückgut zumindest teilweise aufliegen würde. Bei der gezeigten Sperrstellung liegt die Gleitfläche 31 in der Gleitebene.

In Gleitrichtung hinter dem Hebe- und Vorstoppbauteil 30 ist ein Sperrkörper 40 angeordnet. Dieser Sperrkörper umfasst eine Sperrkörpergleitebene 41, die "höher" als die durch die Lagerschachtböden definierte Gleitebene ist, so dass der Gleitkörper, bedingt durch diesen Höhenunterschied, eine Sperrkante 42 aufweist, die dem Hebe- und Vorstoppbauteil zugewandt ist. Die Auslösevorrichtung umfasst ferner eine Sperre 50, die bei der gezeigten Stellung der Auslösevorrichtung aus dem Sperrkörper herausgefahren ist, d.h. in Figur 2 ist bei sämtlichen dargestellten Auslösevorrichtungen die Sperrstellung der Auslösevorrichtung dargestellt. Bei der in den Figuren beschriebenen Ausführungsform ist im oberen Abschnitt der Sperre eine Sperrrolle 51 angeordnet, die eine Bewegung eines auszugebenden Stückgutes über die Sperre bzw. die Sperrkörpergleitfläche erleichtert.

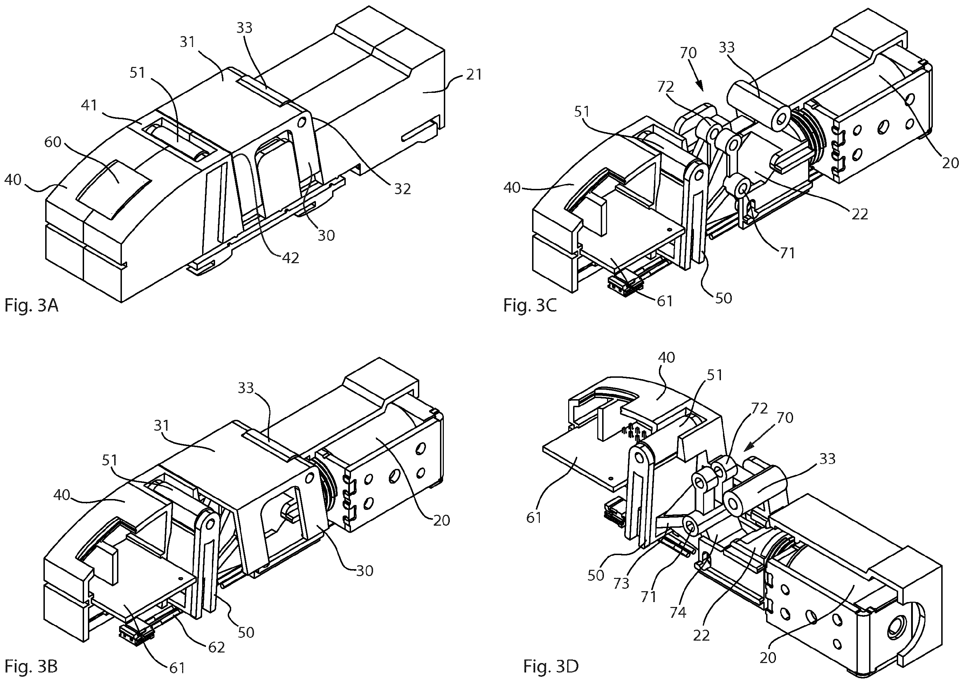

Figuren 3A-3D zeigen Seitenansichten der Auslösevorrichtung, wobei in den Figuren 3B-3D verschiedene Bauteile bzw. Abschnitte von Bauteilen fortgelassen sind, um das Innere der Auslösevorrichtung zu veranschaulichen.

Figur 3A zeigt eine Auslösevorrichtung in der Freigabestellung, in welcher die Sperre 50 vollständig in den Sperrkörper 40 hineinbewegt ist und bei der Sperrkörpergleitfläche 41 des Sperrkörpers 40 lediglich die Sperrrolle 51 zu erkennen ist. Bei der dargestellten Freigabestellung ist die Gleitfläche 31 des Hebe- und Vorstoppbauteiles an der Sperrkörpergleitfläche 41 ausgerichtet, so dass ein auf dieser gemeinsamen Gleitfläche 31, 41 aufliegendes Stückgut über die Auslösevorrichtung ausgegeben werden kann, d.h. es rutscht bzw. gleitet schwerkraftbedingt entlang der gemeinsamen Gleitfläche 31, 41 aus dem Lagerschacht bzw. der Auslösevorrichtung.

In dieser Freigabestellung ist ferner der Anschlag 32 des Hebe- und Vorstoppbauteiles 30 zu erkennen, der die Bewegung eines nachfolgenden Stückgutes in der Freigabestellung bereits vor dem eigentlichen Stopp für die Stückgüter, der bei nachfolgenden Figuren beschrieben wird, anhält bzw. stoppt oder zumindest verlangsamt. Ein ungewolltes "Durchrutschen" mehrerer Stückgüter in der Freigabestellung wird damit wirksam unterbunden.

An das Hebe- und Vorstoppbauteil 30 schließt sich, entgegen der Gleitrichtung, ein Antriebsgehäuse 21 an, in welchem ein (nicht dargestellter) Antrieb angeordnet ist. Bei Figur 3A ist ferner zu erkennen, dass in Gleitrichtung hinter der Sperre 50 ein Ausgabesensor 60 in dem Sperrkörper 40 angeordnet ist.

Bei Figur 3B sind Abschnitte des Sperrkörpers 40, des Hebe- und Vorstoppbauteils 30 sowie des Antriebsgehäuses 21 fortgelassen. In dem Sperrkörper 40 erkennt man eine Platine 61 des Ausgabesensors 60, wobei die Platine 61 über Leitungen 62, die lediglich angedeutet sind, mit einer Steuereinrichtung einer Kommissioniervorrichtung verbunden sind, in welcher die Auslösevorrichtung verwendet wird. In dem Sperrkörper 40 kann man ferner die Sperre 50 erkennen, die in der dargestellten Freigabestellung vollständig in den Sperrkörper eingefahren ist. Durch Fortlassen eines Abschnittes des Antriebsgehäuses 21 ist ferner der Antrieb 20 zu erkennen, der über in dieser Figur nicht erkennbare Mittel mit der Sperre 50 sowie dem Hebe- und Vorstoppbauteil 30 gekoppelt ist.

Bei der in Figur 3C gezeigten Darstellung ist das Hebe- und Vorstoppbauteil 30 fast vollständig fortgelassen und erlaubt einen Blick auf das Innere der Auslösevorrichtung. Bei der dargestellten Ausführungsform umfasst die Auslösevorrichtung einen Bewegungsumsetzer 70, der einen dreiarmigen Abschnitt aufweist, welcher über eine Achse 71 in der Auslösevorrichtung gelagert ist. Die drei Arme 72, 73, 74 des dreiarmigen Abschnittes, von denen lediglich ein Arm 72 in Figur 3C zu erkennen ist, sind mit der Sperre 50, dem Hebe- und Vorstoppbauteil 30 sowie einem Getriebe 22 des Antriebes 20 gekoppelt, und zwar derart, dass durch eine Bewegung des Antriebes die Sperre 50 und das Hebe- und Vorstoppbauteil 30 gleichzeitig bewegt werden. Durch die Ausgestaltung des Bewegungsumsetzers mit dem dreiarmigen Abschnitt ist es gewährleistet, dass bei einem Anheben des Hebe- und Vorstoppbauteiles die Sperre gesenkt wird, und bei einem Absenken des Hebe- und Vorstoppbauteiles die Sperre selber angehoben wird.

Figur 3D zeigt eine weitere Schrägansicht der bevorzugten Ausführungsform, wobei bei dieser Ansicht die drei Arme 72, 73, 74 zu erkennen sind, und zwar in der Position, die sie in der Freigabestellung der Auslösevorrichtung einnehmen.

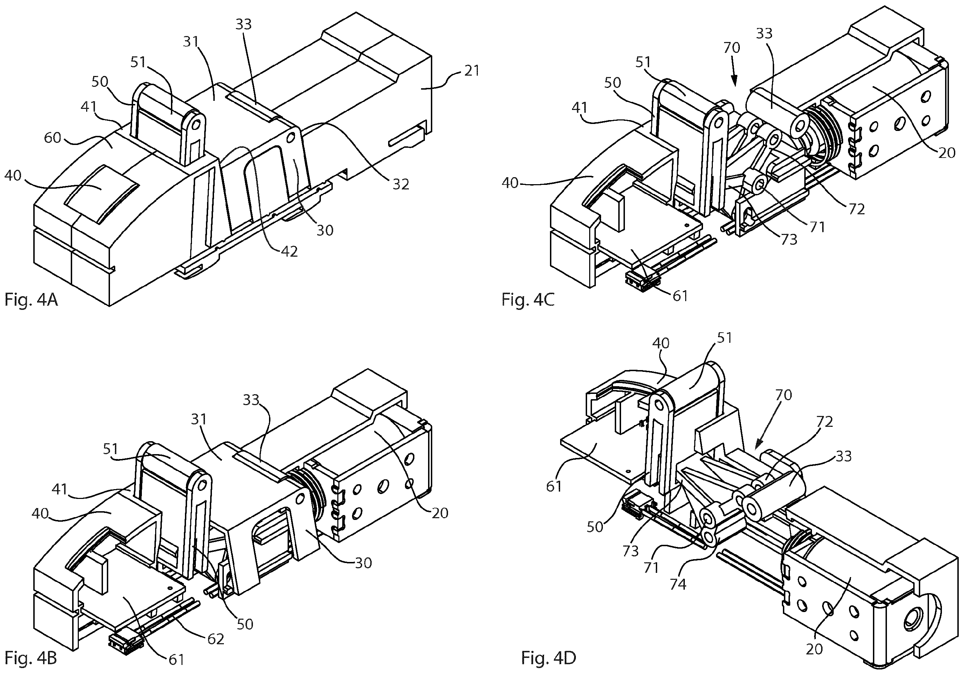

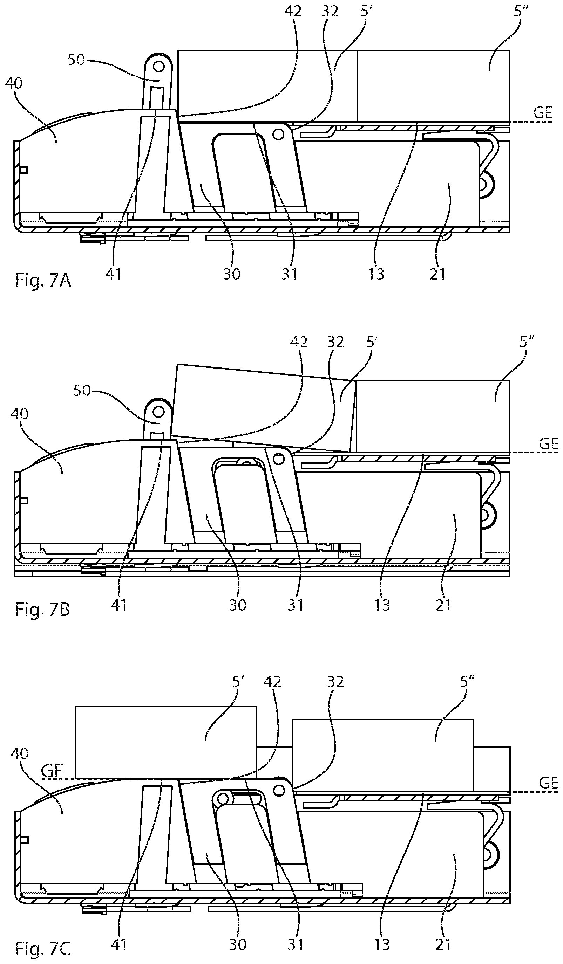

Figuren 4A-4D zeigen den Figuren 3A-3D vergleichbare Ansichten der bevorzugten Ausführungsform, wobei bei den Figuren 4A-4D die Auslösevorrichtung in der Sperrstellung dargestellt ist. In dieser Sperrstellung ist, wie es insbesondere bei Figur 4A zu erkennen ist, die Sperre 50 abschnittsweise aus dem Sperrkörper 40 bewegt und ragt über die Sperrkörpergleitfläche 41 des Sperrkörpers hinaus. Wie es ebenfalls Figur 4A zu entnehmen ist, ist die Gleitfläche 31 des Hebe- und Vorstoppbauteiles 30 gegenüber der Freigabestellung abgesenkt und befindet sich "unterhalb" einer von der Sperrkörpergleitfläche 41 gebildeten Ebene. Aufgrund dieser Anordnung der Gleitfläche 31 des Hebe- und Vorstoppbauteiles 30 ist eine Sperrkante 42 des Sperrkörpers 40 freigegeben, wobei diese Sperrkante die eigentliche Stopp- bzw. Haltefunktion für die Stückgüter übernimmt, was nachfolgend unter Bezugnahme auf die Figuren 7A-7C bei der Beschreibung des bevorzugten Verfahrens detaillierter dargelegt wird.

Wie es insbesondere den Figuren 4C und 4D zu entnehmen ist, befindet sich der Bewegungsumsetzer 70 bei der dargestellten Sperrstellung in einer anderen Anordnung, als dies bei den Figuren 3C und 3D der Fall war. Die drei Arme 72, 73, 74 des dreiarmigen Abschnittes sind in Bezug auf die vorgenannte Darstellung verdreht, wobei diese Verdrehung die Bewegung der Sperre 50 und des Hebe- und Vorstoppbauteils 30 bedingt.

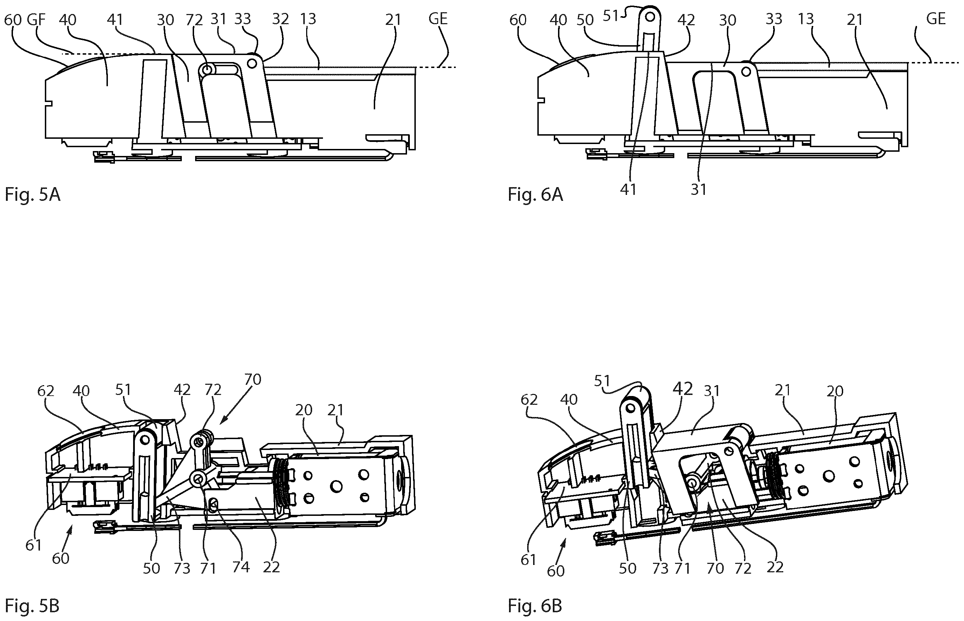

Figuren 5A und 5B zeigen Seitenansichten der bevorzugten Ausführungsform in Freigabestellung, wobei bei Figur 5B Abschnitte des Sperrkörpers 40, des Hebe- und Vorstoppbauteiles 30 sowie des Antriebsgehäuses 21 fortgelassen sind, um im Inneren angeordnete Bauteile der Auslösevorrichtung zu verdeutlichen.

Wie es im linken Abschnitt von Figur 5A zu erkennen ist, ist die Gleitfläche 31 des Hebe- und Vorstoppbauteiles 30 an der Sperrkörpergleitfläche 41 ausgerichtet, und die beiden Gleitflächen bilden eine gemeinsame Gleitfläche GF. In der dargestellten Freigabestellung ist die Gleitfläche des Hebe- und Vorstoppbauteiles "über" der Gleitebene GE angeordnet, die von dem Lagerschachtboden 13 definiert ist bzw. auf einer Höhe mit der Oberfläche des Lagerschachtbodens ist. Wie es bei dieser Darstellung gut zu erkennen ist, umfasst das Hebe- und Vorstoppbauteil 30 einen Anschlag 32, der in dieser Freigabestellung der Auslösevorrichtung über die Gleitebene GE ragt und einen Anschlag für nachfolgende Stückgüter bietet.

In Figur 5B ist noch einmal die Stellung des dreiarmigen Abschnittes des Bewegungsumsetzers 70 veranschaulicht, wobei bei dieser Darstellung zu erkennen ist, dass der mit der Sperre gekoppelte Arm 73 geringfügig länger ausgeführt ist als die beiden Arme 72, 74, die mit dem Hebe- und Vorstoppbauteil und dem Getriebe 22 gekoppelt sind.

Figuren 6A und 6B zeigen zwei Seitenansichten der bevorzugten Ausführungsform in Sperrstellung, bei welcher die Sperre 50 über die Sperrkörpergleitfläche 41 des Sperrkörpers bewegt ist, und die Gleitfläche 31 des Hebe- und Vorstoppbauteiles 30 an der Gleitebene GE, die durch den Lagerschachtboden 13 definiert ist, ausgerichtet ist. Bei dieser Darstellung ist zu erkennen, dass der Sperrkörper 40 eine Sperrkante 42 umfasst, wobei diese Sperrkante die eigentliche Stopp- bzw. Haltefunktion für aufliegende Stückgüter bereitstellt.

Figuren 7A-7C zeigen Seitenansichten einer bevorzugten Ausführungsform der Auslösevorrichtung, angeordnet bei einem Ausgabeende eines Lagerschachtes, sowie zwei in dem Lagerschacht angeordnete Stückgüter 5', 5", wobei anhand dieser Darstellungen eine Ausführungsform des Verfahrens erläutert werden wird.

In Figur 7A ist die Sperrstellung der Auslösevorrichtung dargestellt. Wie man bei dieser Darstellung erkennt, ist die Gleitfläche 31 des Hebe- und Vorstoppbauteiles 30 an der Gleitebene GE ausgerichtet, die von der Oberfläche des Lagerschachtbodens 13 definiert wird. Der Anschlag 32 des Hebe- und Vorstoppbauteiles 30 befindet sich unter der Gleitebene GE und kann daher in dieser Stellung der Auslösevorrichtung keine Stopp- oder Haltewirkung entfalten. Wie es in Figur 7A zu erkennen ist, ist die Sperrkörpergleitfläche 41 "über" der Gleitebene angeordnet, d.h. die Sperrkörpergleitfläche 41 fluchtet nicht mit der Gleitebene, so dass in der Sperrstellung der Auslösevorrichtung die Sperrkante 42 über der Gleitebene angeordnet ist und die Bewegung der Stückgüter 5', 5" in Gleitrichtung, d.h. nach "links" in der Darstellung, verhindert. Wie es dieser Figur ferner zu entnehmen ist, besteht in der Sperrstellung kein Kontakt zwischen einem auszulagernden Stückgut 5` und der Sperre 50, das gesamte Gewicht bzw. der gesamte Druck der in dem Lagerschacht angeordneten Stückgüter wird von der Sperrkante 42, die integraler Bestandteil des Sperrkörpers 40 ist, aufgenommen. Wie bereits dargelegt ermöglicht dies, dass größere und schwerere Stückgüter mit der Auslösevorrichtung zuverlässig ausgegeben werden können.

Zum Ausgeben eines Stückgutes aus dem Lagerschacht wird das mit einem (in Figuren 7A-7C nicht dargestellten) Antrieb gekoppelte Hebe- und Vorstoppbauteil aus der in Figur 7A dargestellten Sperrstellung in eine Freigabestellung bewegt, wobei bei dieser Bewegung die Gleitfläche 31 des Hebe- und Vorstoppbauteiles "nach oben" über die Gleitebene hin zu der Sperrkörpergleitfläche 41 bewegt wird. Bei dieser Bewegung des Hebe- und Vorstoppbauteiles wird, was in Figur 7B angedeutet ist, ein zumindest teilweise auf dem Hebe- und Vorstoppbauteil 30 aufliegendes Stückgut 5' über die Sperrkante 42 des Sperrkörpers gehoben und der Anschlag 32 des Hebe- und Vorstoppbauteiles über die Gleitebene GE bewegt, wodurch ein temporärer Stopp (oder zumindest eine Abbremsung) für ein nachfolgendes Stückgut 5" bereitgestellt wird (siehe Figur 7C). Gleichzeitig mit der Bewegung des Hebe- und Vorstoppbauteiles wird die mit dem (nicht dargestellten) Antrieb gekoppelte Sperre 50 unter die Sperrkörpergleitfläche 41 bewegt. Bei Ausrichtung der Gleitfläche 31 des Hebe- und Vorstoppbauteiles 30 an der Sperrkörpergleitfläche 41 wird das auszugebende Stückgut aus dem Lagerschacht ausgegeben, wobei das nachfolgende Stückgut 5" von dem Anschlag 32 des Hebe- und Vorstoppbauteiles zumindest temporär gehalten wird.

Um von der Freigabestellung wieder in die Sperrstellung zu gelangen, wird das Hebe- und Vorstoppbauteil 30 wieder gesenkt und die Sperre 50 über die Sperrkörpergleitfläche bewegt. Bei der Bewegung des Hebe- und Vorstoppbauteiles wird der Anschlag 32 dieses Bauteiles immer weiter in Richtung auf die Gleitebene bewegt, bis schließlich die Gleitfläche 31 des Hebe- und Vorstoppbauteiles an der Gleitebene 30 ausgerichtet ist und der Anschlag 32 keine Wirkung mehr entfaltet, wobei in dieser Stellung das nachfolgende Stückguts 5" bis zu der durch die Bewegung des Hebe- und Vorstoppbauteiles 30 freigegebene Sperrkante 42 rutscht bzw. gleitet. Aufgrund der Anordnung der Sperrkante und der Sperre wird die Bewegung des Stückgutes lediglich durch die Sperrkante 42 angehalten, die Sperre 50 dient lediglich dazu, ein mögliches Überschlagen des nachfolgenden Stückgutes 5" zu verhindern.

## Patentansprüche

1. Auslösevorrichtung (1) zum Freigeben und Sperren einer Ausgabe eines Stückgutes aus einem geneigten Lagerschacht (10) mit einem Lagerschachtboden (13) und einem Ausgabeende (11), wobei der Lagerschachtboden (13) eine Gleitebene (GE) definiert und sich Stückgüter entlang der Längsrichtung des Lagerschachtes (10) in einer Gleitrichtung aus dem Lagerschacht (10) bewegen können, aufweisend
einen Antrieb (20),
ein Hebe- und Vorstoppbauteil (30) mit einer oberen Gleitfläche (31), wobei das Hebe- und Vorstoppbauteil (30) mit dem Antrieb (20) derart gekoppelt ist, dass die Gleitfläche (31) über die Gleitebene (GE) in eine Freigabestellung der Auslösevorrichtung und auf eine Höhe mit der Gleitebene (GE) in eine Sperrstellung der Auslösevorrichtung bewegbar ist, und wobei das Hebe- und Vorstoppbauteil (30) einen in der Freigabestellung über die Gleitebene (GE) ragenden Anschlag (32) aufweist,
**gekennzeichnet durch** einen in Gleitrichtung stromab des Hebe- und Vorstoppbauteils (30) angeordneten Sperrkörper (40) mit einer oberen Sperrkörpergleitfläche (41), einer über die Gleitebene (GE) ragenden permanenten Sperrkante (42), die als integraler Bestandteil des Sperrkörpers ausgebildet ist, sowie einer zur Verhinderung eines Überschlags des Stückguts an der Sperrkante ein- und ausfahrbaren Sperre (50), wobei die Sperre (50) derart mit dem Antrieb (20) gekoppelt ist, dass die Sperre (50) unter die Sperrkörpergleitfläche (41) in eine Freigabestellung der Auslösevorrichtung und über die Sperrkörpergleitfläche (41) in eine Sperrstellung der Auslösevorrichtung bewegbar ist,
wobei die Sperre (50) derart ausgebildet ist, dass die Sperrkante (42) in Gleitrichtung stromauf der Sperre (50) ausgebildet ist, so dass in der Sperrstellung der Auslösevorrichtung, in welcher die Gleitfläche (31) des Hebe- und Vorstoppbauteils an der Gleitebene ausgerichtet ist, kein dauerhafter Kontakt zwischen Stückgut und Sperre (50) stattfindet, sondern dass die Bewegung der Stückgüter in dem Lagerschacht durch die Sperrkante (42) gestoppt wird.

2. Auslösevorrichtung (1) nach Anspruch 1, **dadurch gekennzeichnet, dass** diese einen Bewegungsumsetzer (70) aufweist, der mit dem Antrieb (20), dem Hebe- und Vorstoppbauteil (30) und der Sperre (50) des Sperrkörpers (40) derart gekoppelt ist, dass bei Bewegung des Bewegungsumsetzers (70) das Hebe- und Vorstoppbauteil (30) und die Sperre (50) gleichzeitig bewegbar sind.

3. Auslösevorrichtung (1) nach Anspruch 2, **dadurch gekennzeichnet, dass** der Bewegungsumsetzer (70) einen um eine Achse (71) drehbaren dreiarmigen Abschnitt aufweist, wobei die drei Arme (72, 73, 74) des dreiarmigen Abschnitts mit dem Hebe- und Vorstoppbauteil (30), der Sperre (50) und einem Getriebe (22) des Antriebs (20) gekoppelt sind.

4. Auslösevorrichtung (1) nach einem der Ansprüche 1 - 3, **dadurch gekennzeichnet, dass** der Sperrkörper (40) einen Ausgabesensor (60) umfasst, der das Ausgeben eines Stückgutes aus einem Lagerschacht (10) erfasst.

5. Auslösevorrichtung (1) nach einem der Ansprüche 1 - 4, **dadurch gekennzeichnet, dass** die Sperre (50) bei ihrem oberen Abschnitt eine Sperrrolle (51) umfasst.

6. Auslösevorrichtung (1) nach einem der Ansprüche 1 - 5, **dadurch gekennzeichnet, dass** bei dem Anschlag (32) eine Anschlagrolle (33) angeordnet ist.

7. Auslösevorrichtung (1) nach einem der Ansprüche 1 - 6, **dadurch gekennzeichnet, dass** die Gleitfläche (31) des Hebe- und Vorstoppbauteil (30) und/oder die Sperrkörpergleitfläche (41) eine Beschichtung mit vermindertem Reibungswiderstand aufweisen.

8. Verfahren zum Ausgeben eines Stückgutes aus einem geneigten Lagerschacht (10) mit einer Auslösevorrichtung nach Anspruch 1, in welchem mehrere in Gleitrichtung hintereinander liegende Stückgüter angeordnet sind und der einen eine Gleitebene (GE) definierenden Lagerschachtboden (13) aufweist, wobei
das mit dem Antrieb (20) gekoppelte Hebe- und Vorstoppbauteil (30) aus einer Sperr- in eine Freigabestellung der Auslösevorrichtung bewegt wird, wobei die Gleitfläche (31) des Hebe- und Vorstoppbauteil (30) über die Gleitebene (GE) bewegt wird, mit Bewegung des Hebe- und Vorstoppbauteils (30) ein zumindest teilweise aufliegendes auszugebendes Stückgut (5') über die Sperrkante (42) des Sperrkörpers (40) gehoben wird, der in Gleitrichtung stromab dem Hebe- und Vorstoppbauteil (30) angeordnet ist, der Anschlag (32) des Hebe- und Vorstoppbauteils (30) über die Gleitebene (GE) bewegt wird und einen temporären Stopp für ein nachfolgendes Stückgut (5") bereitstellt, die mit dem Antrieb (20) gekoppelte Sperre (50) in dem Sperrkörper (40) unter die Sperrkörpergleitfläche (41) bewegt wird, und
das auszugebende Stückgut (5') über die Sperrkörpergleitfläche (41) aus dem Lagerschacht (10) austritt und das nachfolgende Stückgut (5") von dem Anschlag (32) des Hebe- und Vorstoppbauteils (30) zumindest temporär gehalten wird.

9. Verfahren zum Ausgeben eines Stückgutes aus einem geneigten Lagerschacht (10) nach Anspruch 8, **dadurch gekennzeichnet, dass**, nach dem Ausgeben des auszugebenden Stückgutes (5'),
das Hebe- und Vorstoppbauteil (30) wieder in die Sperrstellung bewegt wird, wobei die Gleitfläche (31) an der Gleitebene (GE) ausgerichtet wird und sich das nachfolgende Stückgut (5") bei erfolgter Ausrichtung in Gleitrichtung auf die Sperrkante (42) bewegt, welche für das Stückgut einen Anschlag bereitstellt, und
die Sperre (50) über die Sperrkörpergleitfläche (41) bewegt wird und bei Anschlag des nachfolgenden Stückgutes (5") an der Sperrkante (42) ein Überschlagen des Stückgutes (5") verhindert.

10. Verfahren zum Ausgeben eines Stückgutes aus einem geneigten Lagerschacht (10) nach Anspruch 8 oder 9, **dadurch gekennzeichnet, dass** das Austreten des auszugebenden Stückgutes mit einem Ausgabesensor (60) überwacht wird.

## Claims

1. Trigger device (1) for enabling and blocking delivery of a piece good from an inclined storage chute (10) having a storage chute base (13) and a delivery end (11), wherein the storage chute base (13) defines a sliding plane (GE), and piece goods are able to move from the storage chute (10) in a sliding direction along the longitudinal direction of the storage chute (10), comprising
a drive (20),
a lifting and pre-stopping component (30) having an upper sliding surface (31), wherein the lifting and pre-stopping component (30) is coupled to the drive (20) in such a way that the sliding surface (31) is movable over the sliding plane (GE) into an enabled position of the trigger device, and is movable at the level of the sliding plane (GE) into a blocked position of the trigger device, and wherein the lifting and pre-stopping component (30) has a stop (32) which in the enabled position protrudes beyond the sliding plane (GE),
**characterized in that** a blocking element (40), situated downstream of the lifting and pre-stopping component (30) in the sliding direction, having an upper blocking element sliding surface (41), a permanent blocking edge (42), protruding beyond the sliding plane (GE), which is designed as an integral component of the blocking element, and an extendable and retractable block (50) for preventing a rollover of the piece good, wherein the block (50) is coupled to the drive (20) in such a way that the block (50) is movable below the blocking element sliding surface (41) into an enabled position, and is movable above the blocking element sliding surface (41) into a blocked position of the trigger device,
wherein the block (50) is designed in such a way that the blocking edge (42) is provided in upstream of the block (50) in the sliding direction, so that in the blocked position of the trigger device in which the sliding surface (31) of the lifting and pre-stopping component is aligned with the sliding plane, no permanent contact between the piece good and the block (50) takes place but the movement of the piece goods in the storage chute is stopped by the blocking edge (42).

2. Trigger device (1) according to Claim 1, **characterized in that** it has a movement converter (70) which is coupled to the drive (20), the lifting and pre-stopping component (30), and the block (50) of the blocking element (40) in such a way that when the movement converter (70) moves, the lifting and pre-stopping component (30) and the block (50) are movable at the same time.

3. Trigger device (1) according to Claim 2, **characterized in that** the movement converter (70) has a three-armed section which is rotatable about an axis (71), wherein the three arms (72, 73, 74) of the three-armed section are coupled to the lifting and pre-stopping component (30), the block (50), and a gear (22) of the drive (20).

4. Trigger device (1) according to one of Claims 1-3, **characterized in that** the blocking element (40) includes a delivery sensor (60) which detects the delivery of a piece good from a storage chute (10).

5. Trigger device (1) according to one of Claims 1-4, **characterized in that** the block (50) in its upper portion includes a blocking roller (51).

6. Trigger device (1) according to one of Claims 1-5, **characterized in that** a stop roller (33) is situated at the stop (32).

7. Trigger device (1) according to one of Claims 1-6, **characterized in that** the sliding surface (31) of the lifting and pre-stopping component (30) and/or the blocking element sliding surface (41) have/has a coating with reduced friction resistance.

8. Method for delivering a piece good from an inclined storage chute (10) with a trigger device according to Claim 1, in which multiple piece goods are situated one behind the other in the sliding direction, and which has a storage chute base (13) which defines a sliding plane (GE), wherein
the lifting and pre-stopping component (30) coupled to the drive (20) is moved from a blocked position into an enabled position of the trigger device, wherein the sliding surface (31) of the lifting and pre-stopping component (30) is moved over the sliding plane (GE),
with the movement of the lifting and pre-stopping component (30), a piece good (5') to be delivered which at least partially rests thereon is lifted over the blocking edge (42) of the blocking element (40) situated downstream of the lifting and pre-stopping component (30) in the sliding direction,
the stop (32) of the lifting and pre-stopping component (30) is moved over the sliding plane (GE) and provides a temporary stop for a subsequent piece good (5"),
the block (50) in the blocking element (40) which is coupled to the drive (20) is moved below the blocking element sliding surface (41), and
the piece good (5') to be delivered exits the storage chute (10) via the blocking element sliding surface (41), and the subsequent piece good (5'') is at least temporarily held by the stop (32) of the lifting and pre-stopping component (30).

9. Method for delivering a piece good from an inclined storage chute (10) according to Claim 8, **characterized in that**, after the piece good (5') to be delivered is delivered,
the lifting and pre-stopping component (30) is moved back into the blocked position, wherein the sliding surface (31) is aligned with the sliding plane (GE), and after alignment in the sliding direction is achieved, the subsequent piece good (5'') moves onto the blocking edge (42), which provides a stop for the piece good, and
the block (50) is moved over the blocking element sliding surface (41), and the piece good (5'') is prevented from rolling over when the subsequent piece good (5'') strikes the blocking edge (42).

10. Method for delivering a piece good from an inclined storage chute (10) according to Claim 8 or 9, **characterized in that** the exiting of the piece good to be delivered is monitored with a delivery sensor (60).

## Revendications

1. Dispositif de déclenchement (1) pour la libération et le blocage d'une sortie d'une marchandise d'un puits de stockage incliné (10) comportant un fond de puits de stockage (13) et une extrémité de sortie (11), le fond de puits de stockage (13) définissant un plan de glissement (GE) et les marchandises pouvant se déplacer dans le sens longitudinal du puits de stockage (10) dans un sens de glissement hors du puits de stockage (10), présentant
un organe de commande (20),
une pièce de levage et de pré-arrêt (30) dotée d'une surface de glissement supérieure (31), la pièce de levage et de pré-arrêt (30) étant couplée à l'organe de commande (20) de manière à ce que la surface de glissement (31) soit mobile au-dessus du plan de glissement (GE) dans une position de libération du dispositif de déclenchement et à une hauteur avec le plan de glissement (GE) dans une position de blocage du dispositif de déclenchement, la pièce de levage et de pré-arrêt (30) présentant une butée (32) dépassant du plan de glissement (GE) dans la position de libération,
**caractérisé par** un corps de blocage (40) disposé dans le sens de glissement en aval de la pièce de levage et de pré-arrêt (30) et comportant une surface supérieure de glissement de corps de blocage (41), une arête de blocage (42) permanente dépassant du plan de glissement (GE) et qui est réalisée sous forme d'une pièce faisant partie intégrante du corps de blocage, de même qu'une barrière (50) rétractable et déployable pour empêcher la marchandise de sauter au niveau de l'arête de blocage, la barrière (50) étant couplée à l'organe de commande (20) de manière à ce que la barrière (50) soit mobile en dessous de la surface de glissement de corps de blocage (41) dans une position de libération du dispositif de déclenchement et au-dessus de la surface de glissement du corps de blocage (41) dans une position de blocage du dispositif de déclenchement,
la barrière (50) étant réalisée de manière à ce que l'arête de blocage (42) soit réalisée dans le sens de glissement en amont de la barrière (50), de sorte que, dans la position de blocage du dispositif de déclenchement dans laquelle la surface de glissement (31) de la pièce de levage et de pré-arrêt est alignée sur le plan de glissement, aucun contact durable entre la marchandise et la barrière (50) ne se produise mais que le mouvement des marchandises dans le puits de stockage soit stoppé par l'arête de blocage (42).

2. Dispositif de déclenchement (1) selon la revendication 1, **caractérisé en ce que** celui-ci présente un convertisseur de mouvement (70) qui est couplé à l'organe de commande (20), à la pièce de levage et de pré-arrêt (30) et à la barrière (50) du corps de blocage (40) de manière à ce que, en cas de mouvement du convertisseur de mouvement (70), la pièce de levage et de pré-arrêt (30) et la barrière (50) soient mobiles simultanément.

3. Dispositif de déclenchement (1) selon la revendication 2, **caractérisé en ce que** le convertisseur de mouvement (70) présente une section à trois bras pouvant tourner autour d'un axe (71), les trois bras (72,73,74) de la section à trois bras étant couplés à la pièce de levage et de pré-arrêt (30), à la barrière (50) et à une transmission (22) de l'organe de commande (20).

4. Dispositif de déclenchement (1) selon une des revendications 1 à 3, **caractérisé en ce que** le corps de blocage (40) présente un capteur de sortie (60) qui détecte la sortie d'une marchandise d'un puits de stockage (10).

5. Dispositif de déclenchement (1) selon une des revendications 1 à 4, **caractérisé en ce que** la barrière (50) comprend un rouleau de blocage (51) dans sa section supérieure.

6. Dispositif de déclenchement (1) selon une des revendications 1 à 5, **caractérisé en ce qu'**un rouleau de butée (33) est disposé sur la butée (32).

7. Dispositif de déclenchement (1) selon une des revendications 1 à 6, **caractérisé en ce que** la surface de glissement (31) de la pièce de levage et de pré-arrêt (30) et/ou la surface de glissement du corps de blocage (41) présente un revêtement ayant une résistance de frottement réduite.

8. Procédé de sortie d'une marchandise d'un puits de stockage incliné (10) à l'aide d'un dispositif de déclenchement selon la revendication 1, dans lequel plusieurs marchandises se trouvant les unes derrière les autres dans le sens de glissement sont disposées et qui présente un fond de puits de stockage (13) définissant un plan de glissement,
la pièce de levage et de pré-arrêt (30) couplée à l'organe de commande (20) étant passée d'une position de blocage à une position de libération du dispositif de déclenchement, la surface de glissement (31) de la pièce de levage et de pré-arrêt (30) étant déplacée au-dessus du plan de glissement (GE),
sous l'effet du mouvement de la pièce de levage et de pré-arrêt (30), une marchandise (5') à sortir reposant du moins partiellement dessus étant soulevée au-dessus de l'arête de blocage (42) du corps de blocage (40) qui est disposé en aval de la pièce de levage et de pré-arrêt (30) dans le sens de glissement,
la butée (32) de la pièce de levage et de pré-arrêt (30) étant déplacée au-dessus du plan de glissement (GE) et constituant un arrêt temporaire pour une marchandise suivante (5"), la barrière (50) couplée à l'organe de commande (20) étant déplacée dans le corps de blocage (40) sous la surface de glissement du corps de blocage (41), et
la marchandise à sortir (5') sortant par la surface de glissement du corps de blocage (41) du puits de stockage (10) et la marchandise suivante (5") étant maintenue du moins temporairement par la butée (32) de la pièce de levage et de pré-arrêt (30).

9. Procédé de sortie d'une marchandise d'un puits de stockage incliné (10) selon la revendication 8, **caractérisé en ce que**, après la sortie de la marchandise à sortir (5'),
la pièce de levage et de pré-arrêt (30) est remise dans la position de blocage, la surface de glissement (31) étant alignée sur le plan de glissement (GE) et la marchandise suivante (5"), une fois que l'alignement est fait, se déplaçant dans le sens de glissement vers l'arête de blocage (42) qui constitue une butée pour la marchandise, et
la barrière (50) étant déplacée au-dessus de la surface de glissement du corps de blocage (41) et empêchant la marchandise (5") de sauter au niveau de l'arête de blocage (42) en cas de butée de la marchandise suivante (5").

10. Procédé de sortie d'une marchandise d'un puits de stockage incliné (10) selon la revendication 8 ou 9, **caractérisé en ce que** la sortie de la marchandise à sortir est surveillée à l'aide d'un capteur de sortie (60).
